(19)

**Europäisches Patentamt**
**European Patent Office**
**Office européen des brevets**

(11)  **EP 3 179 594 B1**

(12)  **EUROPEAN PATENT SPECIFICATION**

(45) Date of publication and mention
of the grant of the patent:
**09.01.2019  Bulletin 2019/02**

(21) Application number: **15760298.8**

(22) Date of filing: **30.07.2015**

(51) Int Cl.:
*H02J 3/38* (2006.01)

(86) International application number:
**PCT/PT2015/000040**

(87) International publication number:
**WO 2016/022034 (11.02.2016 Gazette 2016/06)**

(54) **DYNAMIC CONTROL METHOD OF POWER INJECTED INTO THE POWER GRID BY DISTRIBUTED GENERATORS**

DYNAMISCHE KONTROLLMETHODE FÜR VON VERTEILTEN GENERATOREN IN EIN ENERGIEVERSORGUNGSNETZ EINGESPEISTE LEISTUNG

METHODE DYNAMIQUE DE CONTROLE DE LA PUISSANCE INJECTÉE DANS UN RÉSEAU D'ALIMENTATION EN ÉNÉRGIE PAR DES GÉNÉRATEURS DISTRIBUÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.08.2014  PT 10783114**

(43) Date of publication of application:
**14.06.2017  Bulletin 2017/24**

(73) Proprietor: **INOV INESC INOVACAO - INSTITUTO DE**
**NOVAS TECNOLOGIAS**
**1000-029 Lisboa (PT)**

(72) Inventor: **DOS SANTOS NUNES, Mário Serafim**
**1000-029 Lisboa (PT)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(56) References cited:
**WO-A2-2013/098184**

Printed by Jouve, 75001 PARIS (FR)

**Description**

**Technical field of the Invention:**

The present invention relates to a method of regulating voltage in a power distribution grid to which are connected various micro and mini producers designated in the literature as distributed generators (DG), that simultaneously maximizes the production of DG connected in said power grid and may also ensure fairness in the production of each of the DG taking into account the contracts limitations with power grid operators or regulators.

**Prior Art:**

Maintaining appropriate levels of voltage across the power distribution grid is one of the important challenges that the power distribution operators face. The power consumption varies throughout the day, which means that the power and voltage levels that flow in the network increases or decreases throughout the day to adapt to the loads.

The installation of distributed generators (DG), typically each having a power of less than 100,000 kW and typically spread over a given region, significantly exacerbates this problem since these devices inject additional energy elsewhere in a variable and unpredictable mode since its production is dependent in most cases on climatic factors (sun or wind), which vary significantly throughout the day.

In recent decades the operators have used voltage regulating equipment and capacitor banks to maintain voltage on the grid within desired limits, as described in "Application of Automated Controls for the Voltage Reactive Power Management", US Department of Energy Dec 2012. These devices function properly without DG installed in the distribution grid, as they are designed for grids where the voltage decreases progressively along the feeder, so they are installed in long feeders, typical of rural environments. In the presence of DG the feeder voltage has an unexpected behaviour, as it could reach high values in any location of the feeder due to the presence of DG, which makes more difficult the planning of the deployment of voltage regulators equipment.

In the publication "Control Architectures to Perform Voltage Regulation on Low Voltage Networks Using DG", Nuno Silva Nuno Delgado, Nuno Costa, Alberto Bernardo Antonio Carrapatoso, CIRED Workshop, Lisbon, May 2012, the authors analyse the impact of the deployment of DG on the profile of the distribution network voltage, noting that when there is a high level of DG penetration, voltage tends to rise; if the upper voltage limit is reached, the individual protection of each DG trigger, removing the DG from the grid, which reduces to zero the power injected into the grid by this DG.

On the other hand, if there is a sudden decrease in power injection due to intermittence of the DG, the voltage rapidly decreases, which also causes problems in the grid. In this publication it is proposed a solution to solve this problem, based on sending commands (setpoints, SP) to the DG to reduce the power injected in the grid by the DG with output voltages exceeding the regulatory limit. These SP will be sent to DG controllers using the communication infrastructure of a smart grid, based on different technologies and protocols (PLC, ZigBee, RF Mesh, GPRS, UMTS, LTE, etc.).

There are several papers that propose algorithms to define the SP, generally based on the reading of voltage, current and power factor of the various grid nodes, after which it is triggered an algorithm that calculates the energy flows in the grid and sends successive SP to the DG, in various iterations until the optimal values of power are reached. Examples of these papers include "Dynamic modeling of a microgrid using smart grid technologies", 2012; Papadopoulos, P.N., Papadopoulos T.A., Papagiannis G.K., 4th International Universities Power Engineering Conference (UPEC 2012); "A fast power flow for real-time monitoring in smart grid environments", Milbradt R.G., Canha L.N., Zorrilla P.B., Abaide A.R., Pereira P.R., Schmaedecke S.M., 4th International Conference on Power Engineering, Energy and Electrical Drives (Powereng); "Review of power flow studies on distribution network with distributed generation", Balamurugan K., Srinivasan D., 2011, IEEE 9th International Conference on Power Electronics and Drive Systems (PEDS 2011).

One widely used method is known as Backward/Forward Sweep (BFS), wherein for example in the publication "Three-Phase Radial Distribution Unbalanced Load Flow Method", K. Krushna and S.V. Jaya Ram Kumar, International Refereed Journal of Engineering and Science (IRJES), Volume 1, Issue 1, September 2012, pp.039-042, a variant of this method is described for radial grid topologies, typical of low voltage distribution networks.

WO 2013/098184 A2 discloses a method according to the preamble of independent claim 1.

**General Description of the Invention:**

The present invention aims to provide a method that allows a power distribution network to which are connected a number of distributed generators (DG), for example micro and mini generators energy from a renewable energy source and having a power generating individual nominal less than 100,000 kW, the voltage in the distribution network, does not exceed the regulatory limits and simultaneously maximize production of DG connected to said network, and that can also ensure fairness for the production of each DG taking in consideration the contracts established with operator and regulators of the power distribution network.

The above objective is solved according to the invention by a method according to claim 1.

To achieve this an algorithm is defined based on the measurement of voltage, current and power factor at the output of the DG connected in the same feeder, from which is calculated the maximum power that each DG should inject in the grid to ensure that the voltage on the grid do not exceed the regulatory values, and at the same time maximizes the overall production of the DG for that feeder topology and for the existing levels of consumption.

In the context of the present invention, the expression power distribution should be understood as a general distribution network or main electric power in a given region, for example a power distribution network with a rated voltage between phase and neutral 230 VAC in Europe and 120 VAC in the USA.

## Description of the Figures:

The present invention will now be described in greater detail based on preferred embodiments and the figures which are attached.

The Figures show:

Figure 1: presents a representative diagram of the voltage regulation method, with the medium to low voltage transformer on the secondary substation (SS) on the left side, that connects to a feeder with tree topology with 5 busbars and corresponding loads, and 4 DG. The processing module reads the values of the current sensors, voltage and power factor (V, I, FP) at the output of DG and sends power setpoints (SP) for controlling the DG power;

Figure 2: presents a diagram of a simple feeder with 4 nodes and 2 DG, each one injecting a current of 12A in the grid;

Figure 3: shows a feeder similar to Figure 2 but wherein the current injected by DG1 was reduced to 11.5A;

Figure 4: shows a feeder similar to Figure 3 but wherein the current injected by DG2 was reduced to 11.5A.

## Detailed Description of the Invention:

Although existing algorithms in the prior art allow to calculate SP to send to the DG for voltage regulation in the distribution grid, they do it by successive approximations and usually they require some knowledge of the grid topology and generally achieve approximate solutions. In the present invention, by contrast, a knowledge of the network topology is not required and an accurate solution is obtained by optimizing an objective function subject to a set of constraints to the currents and voltages at the output of DG.

As the proposed method relies on measurements performed only at the feeder at which the DGs are connected, the number of measurements and equipment involved is reduced, resulting in a lightweight and scalable computational implementation, wherein the implementing complexity grows linearly with the number of applicable feeders. As there is no interference between the various feeders, the implementation to a larger grid is merely a replication of the same method to multiple feeders.

Another advantage of the locality of the proposed method is that we can select only the feeders that have DG installed, which reduces the number of network equipment installed to an absolute minimum.

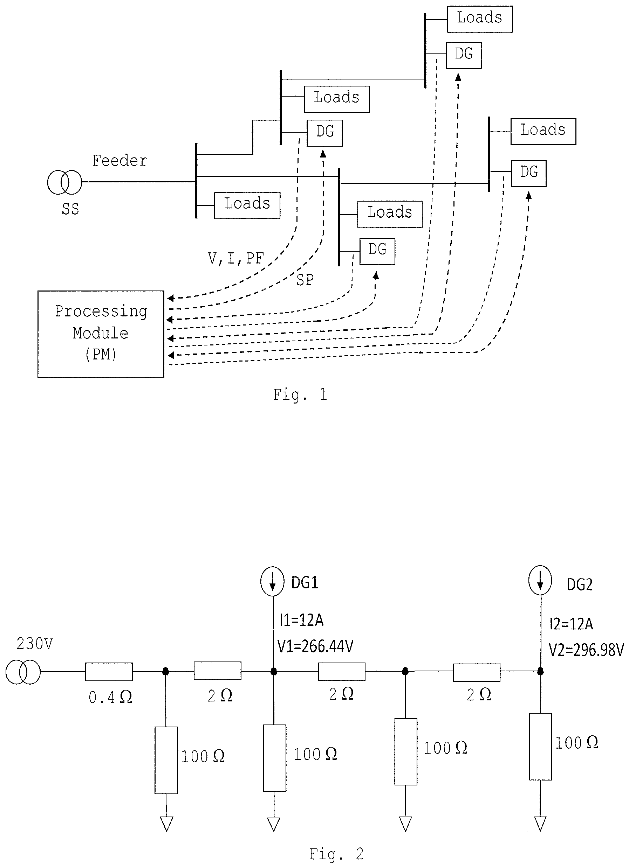

**Figure 1** shows the conceptual diagram of the proposed voltage control method, in which can be seen to the left the medium voltage to low voltage power transformer on the secondary substation (SS) that connects to a feeder (one among the various feeders of a SS), with a typical tree topology, wherein one can observe 5 busses (or busbar), each with their loads (energy consumers), 4 of which with DG connected. There is also a processing module (PM) that processes the values of the current, voltage and power factor (V, I, PF) at the output of DG and calculates the setpoints (SP) to send for the DG to change the power injected by them into the grid when there is the need to regulate the voltage in the feeder.

To illustrate the method proposed in this invention a simple extension is used, with only 4 nodes or busses and two DG, represented by current sources which inject into the grid 12 Amperes, as shown in **Figure 2.**

The first step of the proposed method consists in measuring the current and voltage values at the output of each DG, using for communication with the PM any available communication technology. It is noted that in this case the currents in the DG are I1 = I2 = 12A and the voltages are V1 = 266.44V and V2 = 296.96V, which in both cases exceeds the upper limit voltage of the phase to neutral, which in Europe is 10% above 230V, or 253V. In the example shown the voltages and currents are represented by real numbers because all loads are resistive but in a grid with inductive or capacitive loads these quantities are represented by complex numbers.

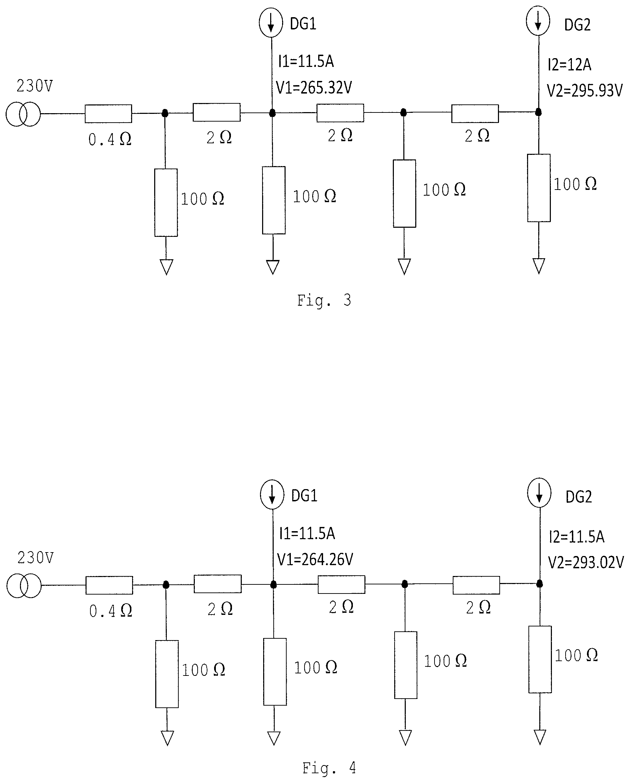

The second step of the proposed method consists in slightly reduce the power injected into the grid at each DG, and then making further measures of currents, voltages and power factors for all DG, repeating the process after each power reduction. Considering that the power reduction of DG1 has lowered the current injected in the grid to 11.5A (with DG2 keeping the current value), the voltages after this DG1 power reduction are indicated in **Figure 3:** V1 = 265.32V and V2 = 295.93V.

Similarly, after performing a slight reduction of DG2 power that resulted in 12 = 11.5A (keeping the previous value of the current in DG1 I1 = 11.5A), we obtain the values of the voltages shown in **Figure 4:** V1 = 264.26V and V2 = 293.02V.

Based on measurements made in the preceding points (a total of Np + 1 measurements in each DG) we obtain the coefficients A(p, m) that relate the change of output voltage at the several DG with to the current variation in each one:

$$A(p,m) = \frac{V(m, \ p) - V(m+1, \ p)}{I1(m) - I2(m)} \qquad (m,p = 1 \ to \ 2) \qquad (1)$$

where I1(m) is the current injected in the grid by DGm before applying the said SP to said DG, I2(m) is the current injected into the grid by DGm after applying said SP to said DG, V(m,p) is the voltage measured at the output of DGp before applying said SP to said GP, V(m +1, p) is the voltage measured at the output of DGp after applying said SP to said GP with p and varying from 1 to 2;

In the example under consideration the values for these coefficients are:

$$A(1,1) = 2.24; \quad A(1,2) = 2.12$$
$$A(2,1) = 2.06; \quad A(2,2) = 5.82$$

Based on said coefficients A(p,m) it is calculated the voltage at the output of each DG considering that there is no production in any DG:

$$V0(p) = V(1,p) - \sum_{m=1}^{2} A(p,m) * I1(m) \qquad (p = 1 \ to \ 2) \qquad (2)$$

In the example under consideration the values obtained are:

$$V0(1) = 214.12V; \quad V0(2) = 202.40V$$

To optimize the overall production of all DG of the feeder we maximize the function Imtot that is the sum of the currents that each DG can inject in the grid without exceeding the maximum voltage Vmax = 253V, in which the current I(p) is multiplied by a constant k(p) that depends on the contract between the producer and the power distributor or aggregator:

$$Imtot = \sum_{p=1}^{2} k(p) * I(p) \qquad (3)$$

where the currents I(p) are subject to restrictions defined in expressions 4 and 5:

$$V0(p) + \sum_{k=1}^{2} A(p,k) * I(k) \leq Vmax(p) \qquad (p = 1 \ to \ 2) \qquad (4)$$

$$0 \leq I(p) \leq I1(p) \qquad (p = 1 \ to \ 2) \qquad (5)$$

In the example under consideration is defined k(p) = 1 and Vmax(p) = 253V for all DG, obtaining optimum values for the optimal currents in each DG:

$$Iot(1) = 13.73A; \quad Iot(2) = 3.84A$$

The voltages at the output of each DG are calculated for the optimal currents Iot (p) by expression 6:

$$Vot(p) = V0(p) + \sum_{k=1}^{2} A(p,k) * Iot(k) \qquad (p = 1\ to\ 2) \qquad (6)$$

In the example under consideration the voltages at the output of DG resulting from the injection in the grid of optimum current values are the following:

Vot(1) = 253V; Vot(2) = 253V

As expected, the voltage limits at the DG outputs are not exceeded.

Based on optimum current and voltage values obtained, one calculates the optimal values of the power Pot (p) which each DG must inject in the grid 7 according to the expression:

$$Pot(p) = Vot(p) * Iot(p) \qquad (p = 1\ to\ 2) \qquad (7)$$

In this example the power values obtained are as follows, rounded to Watt:

Pot(1) = 3474 W
Pot(2) = 972 W
Sum = 4446 W

The Pot(p) values calculated are sent to each of the DG with power reduction commands (SP), using any available means of communication, including PLC or a wireless communications network.

As shown in this example, the criterion of optimization of the overall feeder production leads to that the power injected in the grid by each DG can be very different, in this example one of the DG produces about 3.6 times more than the other.

In case that a higher fairness between producers is required, it can impose the requirement that each DG must produce a minimum power Pmin(p), which may vary depending on the DG capacity or contract with the grid operator, resulting in the minimum current value Imin(p) defined by expression 8:

$$Imin(p) = \frac{Pmin(p)}{V(1,p)} \qquad (p = 1\ to\ 2) \qquad (8)$$

Function Imtot (expression 3) is also maximized, where the currents I(p) are also subject to the restriction defined in the expression 4, but restricting 5 should be changed to the expression 9:

$$Imin(p) \le I(p) \le I1(p) \qquad (p = 1\ to\ 2) \qquad (9)$$

Running the optimization algorithm subject to these new constraints, where Imin(p) is considered equal for all DG, one calculates the maximum value Imin which has a valid solution as Imin = 6.4.

For the currents injected by the two DG we obtain:

Iot(1) = 6.48A    Iot(2) = 6.40A

The voltage values at the outputs of the DG corresponding for these currents are:

V0(1) = 242V    V0(2) = 253V

Calculating the generated power, we obtain the values:

Pot(1) = 1568 W
Pot(2) = 1619 W
Sum = 3187 W

As shown, the disadvantage of the introduction of production equity criteria between DG is that there may be a reduction of the total power generated in the feeder, compared to the value obtained without this restriction. In this example the power reduction was approximately 28%.

The proposed method should be repeated over time in order to adapt to changes in DG production and consumption of users connected at the same feeder, the voltage variation at the SS transformer and the possible changes to the feeder topology. A criterion for deciding when you need to perform again said method is to measure the voltage output of the DG and execute again the method when one or more voltages are outside the defined limits.

**Claims**

1. Method for control of the power injected in an electrical distribution grid by at least a power generator, for example a power generator from renewable energy source, designated as Distributed Generators (DG), for instance a generator from renewable energy, for instance connected along a distribution feeder starting from a secondary substation (SS), **characterized in that** said method includes at least one cycle comprising the following steps:

   - measuring of voltages, currents and power factors, or other parameters of electric energy that allow to determine these, at the outputs of the DG's connected to said feeder;
   - sending to each of said DG a command to reduce the power that each of them injects into the grid, referred to as power adjustment setpoint (SP), after which it is made a new current measurement in this DG, and also measuring the voltage at the outputs of all DG's connected to said feeder;
   - communicating the measured parameters to a processing module (PM) provided so that it can perform calculations, wherein said communication is performed by any means of communication, including through the power line or via a wireless communication technology; **characterized by**

   - transforming said measurements in complex magnitudes of voltage and current;
   - calculating the sensitivity coefficients (A) of voltage with respect to variation of the current injected by each of them, based on the performed measurements of current and voltage, by expression 1:

   $$A(p,m) = \frac{V(m,\ p) - V(m+1,\ p)}{I1(m) - I2(m)} \quad (1)$$

   where:

   - I1(m) is the current injected into the grid by DG m before applying said SP to said DG,
   - I2(m) is the current injected into the grid by DG m after applying said SP to said DG,
   - V(m, p) is the voltage measured at the output of DG p before applying said SP to said GP,
   - V(m+1, p) is the voltage measured at the output of DG p after applying said SP to said GP,
   - with p and m varying from 1 to N;

   - calculating the voltage that would exist at the output of each DG in case there is no DG connected to said feeder, based on said coefficients A and on said measurements of current, voltage and power factor at each DG, through the expression 2:

   $$V0(p) = V(1,p) - \sum_{m=1}^{N} A(p,m) * I1(m) \quad (2)$$

   where:

   - V(1, p) is the voltage measured at the DG p before the SP is applied,
   - I1(m) is the current injected into the grid by DG m before the SP is applied,
   - with P and m varying from 1 to N;

   - calculating the maximum value of an
   Imtot function
   subject to two sets of constraints, in order to optimize the global optimal production of all DG of said extension, wherein the function is described by expression 3:

$$Imtot = \sum_{p=1}^{N} k(p) * I(p) \qquad (3)$$

where:

- I(p) is the maximum current that the p DG can inject into the grid and
- k(p) is a constant that is set to 1 by default, but can be changed to a different value as agreed in the contract between energy producers and energy distributor or aggregator;

- calculating the optimization equation defined in expression 3 subject to two sets of constraints, whereby the first of which is defined in expression 4:

$$V0(p) + \sum_{m=1}^{N} A(p,m) * I(m) \leq Vmax(p) \qquad (4)$$

where:

- V0(p) was calculated according to expression 2,
- A(p,m) was calculated according to expression 1,
- I(m) is the current injected into the grid by DG m,
- Vmax(p) is the maximum voltage allowed at the output of DG p,
- where p and m vary from 1 to N,

and the second set of constraints that expression 3 is defined by expression 5:

$$0 \leq I(p) \leq I1(p) \qquad (5)$$

where:

- I1(p) is the current injected by DG p into the grid before applying said SP, and
- where p vary from 1 to N;

- calculating optimal voltages Vot(p) at the output of the DG, based on the values of optimal currents Iot(p) resulting from the optimization of expression 3 subject to the restrictions set forth in the expressions 4 and 5, as defined by expression 6:

$$Vot(p) = V0(p) + \sum_{m=1}^{N} A(p,m) * Iot(m) \qquad (6)$$

where:

- p ry from 1 to N,
- V0(p) are the voltages calculated by expression 2,
- A(p,m) are the coefficients calculated based on expression 1 and
- Iot(m) are the currents calculated based on the set of expressions 3, 4 and 5;

- calculating optimum values of the power Pot(p) which each DG must inject into the grid, based on the optimal values of current and voltage obtained in accordance to expression 7:

$$Pot(p) = Vot(p) * Iot(p) \qquad (7)$$

where:

- Iot(p) are the optimal currents injected by DGs into the grid,
- Vot(p) are the voltages at the output of DG, calculated based on expression 6 and
- p vary from 1 to N;

- sending to each of said DG an SP command with the power values calculated according to expression 7, so as to be able to regulate the voltage in the network and thus comply with voltage regulatory values and simultaneously to obtain the optimum production of the set of DG;

such that said method allows to adjust the voltage on said feeder so that regulatory limits are not exceeded, while allowing to maximize the overall power generated by the DG connected in said feeder, or balance the production among the various DG, or limit the power of specific DG.

2. Method according to claim 1, **characterized in that** said method further includes a step of calculation of maximizing the Imtot function defined in expression 3, including changing the restrictions to which said expression is submitted to, thereby defining a minimum value of current of each DG by means of expression 8:

$$Imin(p) = \frac{Pmin(p)}{V(1, \ p)} \qquad (8)$$

where:

- Pmin(p) is the value of minimum power that is to be guaranteed for DG p,
- V(1, p) is the voltage at said GP before applying said SP, and
- p vary from 1 to N;

in this case there remains the restriction defined in the expression 4 but the expression 5 should be changed to expression 9:

$$Imin(p) \ \leq \ I(p) \ \leq \ I1(p) \qquad (9)$$

where:

- I1(p) is the current injected by DG p,
- Imin(p) is the value calculated by expression 8 and
- p vary from 1 to N,

so that said method provides fairness in the production of each DG by establishing guarantees of minimum production of each generator, which values can vary depending on the capacity of the DG or on the contract with the grid manager.

3. Method according to claims 1 or 2, **characterized in that** said method further comprises a step of determining the different maximum voltages for the various DG connected to a feeder, which means that the Vmax(p) value defined in expression 4 may vary depending on the DG_p, where p vary from 1 to N, allowing to specifically regulate the voltage output of each DG connected to said feeder.

4. Method according to any of claims 1 to 3, **characterized in that** said method further comprises a step of introducing an additional restriction to those shown in expressions 4 and 5, as defined in expression 10:

$$I(p) \ < \ Imax(p)$$

- where:
- p vary from 1 to N and
- Imax(p) is defined by expression 11:

$$Imax(p) = \frac{Pmax(p)}{V(p)}$$

where:

- Pmax(p) is the maximum power allowed for DG p,
- V(p) the corresponding voltage to the output of said DG and
- p vary from 1 to N

so that the existence of very heterogeneous DG in the same feeder can be reconciled, with different production capacities resulting e.g. from solar panels of different dimensions, different sunlight or generator efficiency, allowing also to limit the production of specific DG, depending on the contract established with the operator of the electricity distribution grid.

5. Method according to any one of claims 1 to 4, **characterized in that** said cycle is repeated periodically or aperiodically, in order to adapt to power generation variations of the various DG, or to the consumption of users connected on the same feeder, or to SS transformer voltage variation, or possible changes to the feeder topology, where a criterion for determining whether to perform a new cycle includes the following steps:

- measuring voltages at the output of the DG and
- comparing the measured voltage values with previously defined limits;
- performing a new cycle if one or more of the measured voltage values are above or below the predefined threshold values.

6. Method according to any one of claims 1 to 5, **characterized in that** said step of measuring the voltages, currents and power factors at the outputs of the DG connected on said feeder, provides all necessary information, so that said method does not require any information about the network topology or the consumption of different users connected along the feeder.

7. Method according to any one of claims 1 to 6, **characterized in that** said method further comprises a voltage calculation step at the output of DG j by the expression 12:

$$V(j) = V(1,j) - A(j,k) * I(1,k) \qquad (12)$$

where:

- V(1,j) is the initial voltage at DG j with all DG connected,
- A(j, k) is the coefficients calculated in the expression 1 and
- I(1,k) is the current injected by DG k;

from expression 12 is inferred by analogy the resulting voltage for any combination of DG disconnected,
so that said method allows to determine the impact of the power generated by each DG in the voltage at any point in the feeder, in particular to determine the voltage when there is null production at all DG, as defined in expression 2, in case there a disconnected DG, e.g. DG k.

8. Method according to any one of claims 1 to 7, **characterized in that** said method includes the replication of said cycle to all the phases of all feeders which originate in the same SS, thereby allowing to have a single PM for each SS.

**Patentansprüche**

1. Verfahren zum Steuern der Leistung, die in ein Elektrizitätsverteilungsnetz eingespeist wird durch zumindest einen Leistungsgenerator, beispielsweise einen Leistungsgenerator aus einer erneuerbaren Energiequelle, bezeichnet als verteilte Generatoren (DG), beispielsweise einen Generator erneuerbarer Energie, beispielsweise verbunden entlang einer Verteilungsspeiseeinrichtung beginnend von einer Nebenumspannstation (SS), **dadurch gekenn-**

zeichnet, dass das Verfahren zumindest einen Zyklus umfasst, der die folgenden Schritte aufweist:

- Messen von Spannungen, Strömen und Leistungsfaktoren oder anderen Parametern elektrischer Energie, die es ermöglichen, diese zu bestimmen, an den Ausgängen der DG, die mit der Speiseeinrichtung verbunden sind;
- Senden, an jeden der DG, eines Befehls, die Leistung zu reduzieren, die jeder derselben in das Netz einspeist, bezeichnet als Leistungseinstellsollwert (SP), wonach eine neue Strommessung in diesem DG durchgeführt wird, und auch Messen der Spannung an den Ausgängen aller DG, die mit der Speiseeinrichtung verbunden sind;
- Kommunizieren der gemessenen Parameter an ein Verarbeitungsmodul (PM), das vorgesehen ist, so dass dasselbe Berechnungen durchführen kann, wobei die Kommunikation durch jede Art von Kommunikationsmittel durchgeführt wird, einschließlich über die Stromleitung oder über eine drahtlose Kommunikationstechnologie;

gekennzeichnet durch

- Transformieren der Messungen in komplexe Beträge von Spannung und Strom;
- Berechnen der Empfindlichkeitskoeffizienten (A) einer Spannung in Bezug auf eine Schwankung des Stroms, der durch jeden derselben eingespeist wird, basierend auf den durchgeführten Messungen von Strom und Spannung, durch Gleichung 1:

$$A(p,m) = \frac{V(m,\ p) - V(m+1,\ p)}{I1(m) - I2(m)} \quad (1)$$

wobei:

- $I1(m)$ der Strom ist, der in das Netz eingespeist wird durch DG m vor dem Anlegen des SP an den DG,
- $I2(m)$ der Strom ist, der in das Netz eingespeist wird durch DG m nach dem Anlegen des SP an den DG,
- $V(m, p)$ die Spannung ist, die an dem Ausgang des DG p gemessen wird vor dem Anlegen des SP an den GP,
- $V(m+1, p)$ die Spannung ist, die an dem Ausgang des DG p gemessen wird nach dem Anlegen des SP an den GP,
- wobei p und m von 1 bis N variieren;

- Berechnen der Spannung, die an dem Ausgang jedes DG vorliegen würde, falls kein DG mit der Speiseeinrichtung verbunden ist, basierend auf den Koeffizienten A und auf den Messungen von Strom, Spannung und Leistungsfaktor an jedem DG, durch die Gleichung 2:

$$V0(p) = V(1,p) - \sum_{m=1}^{N} A(p,m) * I1(m) \quad (2)$$

wobei:

- $V(1, p)$ die Spannung ist, die an dem DG p gemessen wird bevor der SP angelegt wird,
- $I1(m)$ der Strom ist, der in das Netz eingespeist wird durch den DG m bevor der SP angelegt wird,
- wobei P und m von 1 bis N variieren;

- Berechnen des maximalen Werts einer Imtot-Funktion, die zwei Sätzen von Beschränkungen unterworfen ist, um die globale optimale Produktion aller DG der Erweiterung zu optimieren, wobei die Funktion beschrieben ist durch Gleichung 3:

$$Imtot = \sum_{p=1}^{N} k(p) * I(p) \quad (3)$$

wobei:

- $I(p)$ der maximale Strom ist, den der p DG in das Netz einspeisen kann und
- $k(p)$ eine Konstante ist, die standardmäßig auf 1 gesetzt ist, aber zu einem anderen Wert geändert werden kann, wie es in dem Vertrag zwischen Energieerzeugern und Energieverteiler der -abnehmergemeinschaft vereinbart ist;

- Berechnen der Optimierungsgleichung definiert in Gleichung 3, die zwei Sätzen von Beschränkungen unterworfen ist, wobei der erste desselben in Gleichung 4 definiert ist:

$$V0(p) + \sum_{m=1}^{N} A(p,m) * I(m) \leq Vmax(p) \quad (4)$$

wobei:

- V0(p) gemäß Gleichung 2 berechnet wurde,
- A(p,m) gemäß Gleichung 1 berechnet wurde,
- I(m) der Strom ist, der durch den DG m in das Netz eingespeist wird,
- Vmax(p) die maximale Spannung ist, die an dem Ausgang des DG p erlaubt ist,
- wobei p und m von 1 bis N variieren,
und der zweite Satz von Beschränkungen dieser Gleichung 3 durch Gleichung 5 definiert ist

$$0 \leq I(p) \leq I1(p) \quad (5)$$

wobei:

- I1(p) der Strom ist, der durch DG p in das Netz eingespeist wurde bevor der SP angelegt wird und
- wobei p von 1 bis N variieren;

- Berechnen optimaler Spannungen Vot(p) an dem Ausgang des DG, basierend auf den Werten optimaler Ströme Iot(p), die sich aus der Optimierung von Gleichung 3 ergeben, die den in den Gleichungen 4 und 5 aufgeführten Beschränkungen unterworfen ist, wie es durch Gleichung 6 definiert ist:

$$Vot(p) = V0(p) + \sum_{m=1}^{N} A(p,m) * Iot(m) \quad (6)$$

wobei:

- p von 1 bis N variieren,
- V0(p) die Spannungen sind, die durch Gleichung 2 berechnet werden,
- A(p,m) die Koeffizienten sind, die basierend auf der Gleichung 1 berechnet werden und
- Iot(m) die Ströme sind, die basierend auf dem Satz von Gleichungen 3, 4 und 5 berechnet werden;

- Berechnen optimaler Werte der Leistung Pot(p), die jeder DG in das Netz einspeisen muss, basierend auf den optimalen Werten von Strom und Spannung, die gemäß Gleichung 7 erhalten werden:

$$Pot(p) = Vot(p) * Iot(p) \quad (7)$$

wobei:

- Iot(p) die optimalen Ströme sind, die durch DG in das Netz eingespeist werden;
- Vot(p) die Spannungen an dem Ausgang des DG sind, berechnet basierend auf Gleichung 6 und
- p von 1 bis N variieren;

- Senden, an jeden DG, eines SP-Befehls mit den Leistungswerten, die gemäß Gleichung 7 berechnet wurden, um die Spannung in dem Netzwerk regeln zu können und somit Spannungsregulierungswerten zu entsprechen und gleichzeitig die optimale Produktion des Satzes von DG zu erhalten;
- so dass es das Verfahren ermöglicht, die Spannung auf der Speiseeinrichtung einzustellen, so dass Regulierungsgrenzen nicht überschritten werden, während es ermöglicht wird, die Gesamtleistung, die durch die DG erzeugt wird, die in der Speiseeinrichtung verbunden sind, zu maximieren, oder die Produktion zwischen den verschiedenen DG auszugleichen oder die Leistung des spezifischen DG zu begrenzen.

2. Verfahren gemäß Anspruch 1, **dadurch gekennzeichnet, dass** das Verfahren ferner einen Schritt der Berechnung des Maximierens der Imtot-Funktion umfasst, die in Gleichung 3 definiert ist, einschließlich des Änderns der Beschränkungen, denen die Gleichung unterworfen ist, wodurch ein minimaler Stromwert jedes DG definiert wird durch Gleichung 8:

$$Imin(p) = \frac{Pmin(p)}{V(1,\ p)} \qquad (8)$$

wobei:

- Pmin(p) der Wert der minimalen Leistung ist, die für den DG p zu garantieren ist,
- V(1, p) die Spannung an dem GP ist, bevor der SP angelegt wird und
- p von 1 bis N variieren;

in diesem Fall bleibt die Beschränkung, die in der Gleichung 4 definiert ist, aber die Gleichung 5 sollte zu Gleichung 9 geändert werden:

$$Imin(p) \leq I(p) \leq I1(p) \qquad (9)$$

wobei:

- I1(p) der Strom ist, der durch den DG p eingespeist wird,
- Imin(p) der Wert ist, der durch die Gleichung 8 berechnet wird und
- p von 1 bis N variieren,

so dass das Verfahren eine Fairness bei der Produktion jedes DG bereitstellt durch Bestimmen von Garantien einer minimalen Produktion jedes Generators, wobei diese Werte in Abhängigkeit von der Kapazität des DG oder dem Vertrag mit dem Netzverwalter variieren können.

3. Verfahren gemäß Anspruch 1 oder 2, **dadurch gekennzeichnet, dass** das Verfahren ferner einen Schritt des Bestimmens der unterschiedlichen maximalen Spannungen für die verschiedenen DG aufweist, die mit einer Speiseeinrichtung verbunden sind, was bedeutet, dass der Vmax(p)-Wert, der in der Gleichung 4 definiert ist, in Abhängigkeit von dem DG_p variieren kann, wobei p von 1 bis N variieren, was es ermöglicht, die Spannungsausgabe jedes DG, der mit der Speiseeinrichtung verbunden ist, speziell zu regeln.

4. Verfahren gemäß einem der Ansprüche 1 bis 3, **dadurch gekennzeichnet, dass** das Verfahren ferner einen Schritt des Einführens einer zusätzlichen Beschränkung zu denjenigen aufweist, die in Gleichungen 4 und 5 gezeigt sind, wie es in Gleichung 10 definiert ist:

$$I(p) < Imax(p)$$

- wobei:
- p von 1 bis N variieren und
- Imax(p) definiert ist durch Gleichung 11:

$$Imax(p) = \frac{Pmax(p)}{V(p)}$$

wobei:

- Pmax(p) die maximale Leistung ist, die für den DG p erlaubt ist,
- V(p) die entsprechende Spannung an dem Ausgang des DG ist und
- p von 1 bis N variieren,

so dass die Existenz sehr heterogener DG in der gleichen Speiseeinrichtung ausgeglichen werden kann, wobei unterschiedliche Produktionskapazitäten sich beispielsweise ergeben aus Solarpaneelen unterschiedlicher Größe, unterschiedlicher Sonneneinstrahlung oder Generatoreffizienz, was es auch ermöglicht, die Produktion spezifischer DG zu beschränken in Abhängigkeit von dem Vertrag, der mit dem Betreiber des Elektrizitätsverteilungsnetzes abgeschlossen wurde.

5. Verfahren gemäß einem der Ansprüche 1 bis 4, **dadurch gekennzeichnet, dass** der Zyklus periodisch oder aperiodisch wiederholt wird, um sich an Leistungserzeugungsschwankungen der verschiedenen DG anzupassen oder an den Verbrauch der Nutzer, die auf der gleichen Speiseeinrichtung verbunden sind, oder an eine SS-Transformatorspannungsschwankung oder mögliche Änderungen an der Speiseeinrichtungstopologie, wobei ein Kriterium zum Bestimmen, ob ein neuer Zyklus durchgeführt wird, die folgenden Schritte umfasst:

- Messen von Spannungen an dem Ausgang des DG und
- Vergleichen der gemessenen Spannungswerte mit vorher definierten Grenzen;
- Durchführen eines neuen Zyklus, falls einer oder mehrerer der gemessenen Spannungswerte über oder unter den vordefinierten Schwellenwerten liegen.

6. Verfahren gemäß einem der Ansprüche 1 bis 5, **dadurch gekennzeichnet, dass** der Schritt des Messens der Spannungen, Ströme und Leistungsfaktoren an den Ausgängen der DG, die auf der Speiseeinrichtung verbunden sind, alle notwendigen Informationen bereitstellt, so dass das Verfahren keine Informationen über die Netzwerktopologie oder den Verbrauch unterschiedlicher Nutzer, die entlang der Speiseeinrichtung verbunden sind, benötigt.

7. Verfahren gemäß einem der Ansprüche 1 bis 6, **dadurch gekennzeichnet, dass** das Verfahren ferner einen Spannungsberechnungsschritt am dem Ausgang des DG j umfasst durch die Gleichung 12:

$$V(j) = V(1, j) - A(j, k) * I(1, k) \qquad (12)$$

wobei:

- V(1, j) die Anfangsspannung an dem DG j ist, wenn alle DG verbunden sind,
- A(j, k) die Koeffizienten sind, die in der Gleichung 1 berechnet wurden und
- I(1, k) der Strom ist, der durch den DG k eingespeist wird;

von Gleichung 12 wird analog die resultierende Spannung für jede Kombination von getrennten DG abgeleitet, so dass es das Verfahren ermöglicht, die Auswirkung der Leistung, die durch jeden DG erzeugt wird, in der Spannung an jedem Punkt in der Speiseeinrichtung zu bestimmen, insbesondere die Spannung zu bestimmen, wenn an allen DG null Produktion vorliegt, wie es in Gleichung 2 definiert ist, falls es einen getrennten DG gibt, z. B. DG k.

8. Verfahren gemäß einem der Ansprüche 1 bis 7, **dadurch gekennzeichnet, dass** das Verfahren die Wiederholung dieses Zyklus bei allen Phasen aller Speiseeinrichtungen umfasst, die von der gleichen SS stammen, wodurch es ermöglicht wird, für jede SS ein einziges PM zu haben.

**Revendications**

1. Procédé de contrôle de la puissance injectée dans un réseau d'alimentation en énergie par au moins un générateur de puissance, par exemple un générateur de puissance à partir d'une source d'énergie renouvelable, dénommés Générateurs Distribués (DG), par exemple un générateur d'énergie renouvelable, par exemple connecté le long d'une artère de distribution partant d'une sous-station secondaire (SS), **caractérisé par le fait que** ledit procédé comporte au moins un cycle comprenant les étapes suivantes consistant à:

- mesurer les tensions, les courants et les facteurs de puissance, ou d'autres paramètres de l'énergie électrique qui permettent de les déterminer, aux sorties des DG connectés à ladite artère;

- envoyer à chacun desdits DG une commande pour réduire la puissance que chacun d'eux injecte dans le réseau, dénommée consigne de réglage de puissance (SP), après quoi il est effectué une nouvelle mesure de courant dans ce DG, et mesurer également la tension aux sorties de tous les DG connectés à ladite artère;

- communiquer les paramètres mesurés à un module de traitement (PM) prévu, de sorte qu'il puisse effectuer des calculs, où ladite communication est effectuée par tout moyen de communication, y compris par l'intermédiaire de la ligne de puissance ou par l'intermédiaire d'une technologie de communication sans fil;

**caractérisé par** le fait de

- transformer lesdites mesures en amplitudes complexes de tension et de courant;

- calculer les coefficients de sensibilité (A) de la tension par rapport à la variation du courant injecté par chacun d'eux, sur base des mesures de courant et de tension effectuées, par l'expression 1:

$$A(p, m) = \frac{V(m,\ p) - V(m+1,\ p)}{I1(m) - I2(m)} \quad (1)$$

où:

- I1(m) est le courant injecté dans le réseau par le DG m avant application de ladite SP audit DG,
- I2(m) est le courant injecté dans le réseau par le DG m après application de ladite SP audit DG,
- V(m, p) est la tension mesurée à la sortie du DG p avant application de ladite SP audit GP,
- V(m+1, p) est la tension mesurée à la sortie du DG p après application de ladite SP audit GP,
- p et m variant de 1 à N;

- calculer la tension qui existerait à la sortie de chaque DG au cas où il n'y a pas de DG connecté à cette artère, sur base desdits coefficients A et sur base desdites mesures de courant, de tension et de facteur de puissance à chaque DG, par l'expression 2:

$$V0(p) = V(1, p) - \sum_{m=1}^{N} A(p, m) * I1(m) \quad (2)$$

où:

- V(1, p) est la tension mesurée au DG p avant application de la SP,
- I1(m) est le courant injecté dans le réseau par le DG m avant application de la SP,
- P et m variant de 1 à N;

- calculer la valeur maximale d'une fonction Imtot sujette à deux ensembles de contraintes, pour optimiser la production optimale globale de tous les DG de ladite extension, où la fonction est décrite par l'expression 3:

$$Imtot = \sum_{p=1}^{N} k(p) * I(p) \quad (3)$$

où:

- I(p) est le courant maximum que le DG p peut injecter dans le réseau, et
- k(p) est une constante qui est réglée à 1 par défaut, mais qui peut être changée à une valeur différente, comme convenu dans le contrat entre les producteurs d'énergie et le distributeur ou l'agrégateur d'énergie;

- calculer l'équation d'optimisation définie dans l'expression 3, sujette à deux ensembles de contraintes, la première étant définie dans l'expression 4:

$$V0(p) + \sum_{m=1}^{N} A(p, m) * I(m) \leq Vmax(p) \quad (4)$$

où:

- V0(p) a été calculé selon l'expression 2,
- A(p, m) a été calculé selon l'expression 1,
- I(m) est le courant injecté dans le réseau par le DG m,
- Vmax(p) est la tension maximale permise à la sortie du DG p,
- où p et m varient de 1 à N, et
- le deuxième ensemble de contraintes de l'expression 3 est défini par l'expression 5:

$$0 \leq I(p) \leq I1(p) \qquad (5)$$

où:

- I1(p) est le courant injecté par le DG p dans le réseau avant application de ladite SP, et
- où p varie de 1 à N;

- calculer les tensions optimales Vot(p) à la sortie du DG, sur base des valeurs des courants optimaux Iot(p) résultant de l'optimisation de l'expression 3, sujettes aux restrictions énoncées dans les expressions 4 et 5, telles que définies par l'expression 6:

$$Vot(p) = V0(p) + \sum_{m=1}^{N} A(p,m) * Iot(m) \qquad (6)$$

où:

- p varie de 1 à N,
- V0(p) sont les tensions calculées par l'expression 2,
- A(p, m) sont les coefficients calculés sur base de l'expression 1, et
- Iot(m) sont les courants calculés sur base de l'ensemble des expressions 3, 4 et 5;

- calculer les valeurs optimales de l'énergie Pot(p) que chaque DG doit injecter dans le réseau, sur base des valeurs optimales de courant et de tension obtenues selon l'expression 7:

$$Pot(p) = Vot(p) * Iot(p) \qquad (7)$$

où:

- Iot(p) sont les courants optimaux injectés par les DG dans le réseau,
- Vot(p) sont les tensions à la sortie des DG, calculées sur base de l'expression 6, et
- p varie de 1 à N;

- envoyer à chacun desdits DG une commande SP avec les valeurs de puissance calculées selon l'expression 7, de manière à pouvoir réguler la tension dans le réseau et respecter ainsi les valeurs de régulation de tension et à obtenir simultanément la production optimale de l'ensemble de DG;

de sorte que ledit procédé permette d'ajuster la tension sur ladite artère de sorte que les limites réglementaires ne soient pas excédées, tout en permettant de maximiser la puissance d'ensemble générée par les DG connectés dans ladite artère, ou d'équilibrer la production parmi les différents DG, ou de limiter la puissance des DG spécifiques.

2. Procédé selon la revendication 1, **caractérisé par le fait que** ledit procédé comporte par ailleurs une étape consistant à calculer la maximisation de la fonction Imtot définie dans l'expression 3, y compris de changer les restrictions auxquelles est sujette ladite expression, définissant ainsi une valeur minimale de courant de chaque DG au moyen de l'expression 8:

$$Imin(p) = \frac{Pmin(p)}{V(1,\ p)} \qquad (8)$$

où:

- Pmin(p) est la valeur de l'énergie minimale à garantir pour le DG p,
- V(1, p) est la tension audit GP avant application de ladite SP, et
- p varie de 1 à N;

dans ce cas, il reste la restriction définie dans l'expression 4, mais l'expression 5 doit être changée en expression 9:

$$Imin(p) \leq I(p) \leq I1(p) \qquad (9)$$

où:

- I1(p) est le courant injecté par le DG p,
- Imin(p) est la valeur calculée par l'expression 8, et
- p varie de 1 à N,

de sorte que ledit procédé assure l'équité dans la production de chaque DG en établissant des garanties de production minimale de chaque générateur, valeurs qui peuvent varier en fonction de la capacité du DG ou du contrat avec le gestionnaire du réseau.

3. Procédé selon les revendications 1 ou 2, **caractérisé par le fait que** ledit procédé comprend par ailleurs une étape consistant à déterminer les différentes tensions maximales pour les différents DG connectés à une artère, ce qui signifie que la valeur Vmax(p) définie dans l'expression 4 peut varier en fonction du DG_p, où p varie de 1 à N, permettant de réguler spécifiquement la sortie de tension de chaque DG connecté à ladite artère.

4. Procédé selon l'une quelconque des revendications 1 à 3, **caractérisé par le fait que** ledit procédé comprend par ailleurs une étape consistant à introduire une restriction additionnelle à celles montrées dans les expressions 4 et 5, telle que définie dans l'expression 10:

$$I(p) < Imax(p)$$

où:

- p varie de 1 à N, et
- Imax(p) est définie par l'expression 11 :

$$Imax(p) = \frac{Pmax(p)}{V(p)}$$

où:

- Pmax(p) est l'énergie maximale admise pour le DG p,
- V(p) est la tension correspondante à la sortie dudit DG, et
- p varie de 1 à N

de sorte que l'existence de DG très hétérogènes dans la même artère peut être réconciliée avec différentes capacités de production résultant par exemple de panneaux solaires de différentes dimensions, de l'ensoleillement différent ou de l'efficacité du générateur, permettant également de limiter la production de DG spécifiques en fonction du contrat établi avec l'opérateur du réseau de distribution d'électricité.

**5.** Procédé selon l'une quelconque des revendications 1 à 4, **caractérisé par le fait que** ledit cycle est répété de manière périodique ou apériodique, pour s'adapter aux variations de génération de puissance des différents DG, ou à la consommation des utilisateurs connectés à la même artère, ou à la variation de la tension du transformateur de la SS, ou à de possibles modifications de la topologie de l'artère, où un critère pour déterminer s'il faut effectuer un nouveau cycle comporte les étapes suivantes consistant à:

- mesurer les tensions à la sortie du DG, et
- comparer les valeurs de tension mesurées avec les limites définies auparavant;
- effectuer un nouveau cycle si une ou plusieurs des valeurs de tension mesurées sont supérieures ou inférieures aux valeurs de seuil prédéfinies.

**6.** Procédé selon l'une quelconque des revendications 1 à 5, **caractérisé par le fait que** ledit procédé comprend par ailleurs une étape consistant à mesurer les tensions, les courants et les facteurs de puissance aux sorties des DG connectés à ladite artère, à fournir toutes les informations nécessaires, de sorte que ledit procédé ne requière pas d'informations sur la topologie du réseau ou sur la consommation des différents utilisateurs connectés le long de l'artère.

**7.** Procédé selon l'une quelconque des revendications 1 à 6, **caractérisé par le fait que** ledit procédé comprend par ailleurs une étape consistant à calculer la tension à la sortie du DG j par l'expression 12:

$$V(j) = V(1,j) - A(j,k) * I(1,k) \qquad (12)$$

où:

- V(1, j) est la tension initiale au DG j lorsque tous les DG sont connectés,
- A(j, k) sont les coefficients calculés dans l'expression 1, et
- I(1, k) est le courant injecté par le DG k;

de l'expression 12 est déduite par analogie la tension résultante pour toute combinaison de DG déconnectés, de sorte que ledit procédé permette de déterminer l'impact de l'énergie générée par chaque DG sur la tension en tout point de l'artère, en particulier de déterminer la tension lorsqu'il n'y a pas de production à tous les DG, tel que défini dans l'expression 2, au cas où il y a un DG déconnecté, par exemple le DG k.

**8.** Procédé selon l'une quelconque des revendications 1 à 7, **caractérisé par le fait que** ledit procédé comporte la réplication dudit cycle à toutes les phases de toutes les artères qui proviennent de la même SS, permettant ainsi d'avoir un seul PM pour chaque SS.

Fig. 1

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013098184 A2

### Non-patent literature cited in the description

- Application of Automated Controls for the Voltage Reactive Power Management. US Department of Energy, December 2012
- **NUNO SILVA NUNO DELGADO ; NUNO COSTA ; ALBERTO BERNARDO ANTONIO CARRAPA-TOSO.** Control Architectures to Perform Voltage Regulation on Low Voltage Networks Using DG. CIRED Workshop, May 2012
- Dynamic modeling of a microgrid using smart grid technologies. **PAPADOPOULOS, P.N. ; PAPA-DOPOULOS T.A. ; PAPAGIANNIS G.K.** 4th International Universities Power Engineering Conference. UPEC, 2012
- **MILBRADT R.G. ; CANHA L.N. ; ZORRILLA P.B. ; ABAIDE A.R. ; PEREIRA P.R. ; SCHMAEDECKE S.M.** A fast power flow for real-time monitoring in smart grid environments. *4th International Conference on Power Engineering, Energy and Electrical Drives (Powereng)*
- Review of power flow studies on distribution network with distributed generation. **BALAMURUGAN K. ; SRINIVASAN D.** IEEE 9th International Conference on Power Electronics and Drive Systems. PEDS, 2011
- **K. KRUSHNA ; S.V. JAYA RAM KUMAR.** Three-Phase Radial Distribution Unbalanced Load Flow Method. *International Refereed Journal of Engineering and Science (IRJES),* September 2012, vol. 1 (1), 039-042